(19) Europäisches Patentamt
European Patent Office
Office européen des brevets

(11) **EP 4 564 529 A1**

(12) **EUROPEAN PATENT APPLICATION**

(43) Date of publication:
**04.06.2025 Bulletin 2025/23**

(21) Application number: **24203698.6**

(22) Date of filing: **30.09.2024**

(51) International Patent Classification (IPC):
**H01M 10/613** (2014.01)    **H01M 10/651** (2014.01)
**H01M 10/6552** (2014.01)    **H01M 10/6554** (2014.01)
**H01M 10/6556** (2014.01)    **H01M 10/6569** (2014.01)

(52) Cooperative Patent Classification (CPC):
**H01M 10/625; H01M 10/613; H01M 10/651;**
**H01M 10/6556; H01M 10/6569;** H01M 2200/20;
Y02E 60/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **28.11.2023 CN 202311615823**

(71) Applicant: **BYD Company Limited**
**Shenzhen, Guangdong 518118 (CN)**

(72) Inventors:
• **DONG, Zhen**
**Shenzhen (CN)**
• **CAI, Yaomin**
**Shenzhen (CN)**
• **ZHONG, Ri jun**
**Shenzhen (CN)**
• **XIE, Xunhan**
**Shenzhen (CN)**
• **YUE, Qianli**
**Shenzhen (CN)**

(74) Representative: **Taor, Simon Edward William et al**
**Venner Shipley LLP**
**200 Aldersgate**
**London EC1A 4HD (GB)**

(54) **BATTERY MANAGEMENT SYSTEM AND VEHICLE**

(57) The present disclosure relates to a battery management system and a vehicle. The battery management system includes a battery pack and a heat exchange plate. The heat exchange plate is configured to exchange heat with the battery pack. The heat exchange plate is provided with multiple pairs of inlets and outlets. At least one flow channel is in communication between one pair of inlet and outlet. Projections of all flow channels in the heat exchange plate on the battery pack cover the battery pack. Each inlet is configured to be in communication with an external phase change working medium source. A dryness of a phase change working medium at each outlet is less than or equal to 0.93. In the battery management system of the present disclosure, multiple pairs of inlets and outlets are provided on a heat exchange plate, and a flow channel in which a phase change working medium flows is arranged between one pair of inlet and outlet. In this way, the heat exchange plate can absorb heat released by different regions of the battery pack. In addition, a dryness of the phase change working medium at each outlet is less than or equal to 0.93, which ensures a heat dissipation effect of the heat exchange plate. Therefore, temperature uniformity and heat dissipation efficiency of the battery management system of the present disclosure are improved.

FIG. 1

EP 4 564 529 A1

## Description

### FIELD

The present disclosure relates to the field of batteries, and in particular, to a battery management system and a vehicle including the battery management system.

### BACKGROUND

During operation of a battery management system, a battery pack inside the battery management system usually releases heat. To reduce the impact of the heat on the battery pack, in the related art, a heat exchange plate attached to the battery pack is usually arranged in a battery tray, and a cooling liquid in the heat exchange plate is used to absorb the heat, to reduce the temperature of the battery pack.

However, during actual operation of the battery management system, different regions of the battery pack usually release different amounts of heat. As the cooling liquid flows through a flow channel in the heat exchange plate, the temperature of the cooling liquid also gradually rises, which reduces a heat dissipation effect of the cooling liquid, and causes poor heat dissipation efficiency of the battery management system.

### SUMMARY

In view of the foregoing deficiency of the related art, an objective of the present disclosure is to provide a battery management system that improves temperature uniformity and improves heat dissipation efficiency, and a vehicle including the battery management system. Specifically, the following technical solutions are included.

According to a first aspect, an embodiment of the present disclosure provides a battery management system, including a battery pack and a heat exchange plate. The heat exchange plate is configured to exchange heat with the battery pack.

The heat exchange plate is provided with multiple pairs of inlets and outlets. At least one flow channel is in communication between one pair of inlet and outlet. Projections of all flow channels in the heat exchange plate on the battery pack cover the battery pack.

Each inlet is configured to be in communication with an external phase change working medium source. A dryness of the phase change working medium at each outlet is less than or equal to 0.93.

In the battery management system of the present disclosure, multiple pairs of inlets and outlets are provided on a heat exchange plate, and a flow channel is arranged between one pair of inlet and outlet. In this way, the heat exchange plate can achieve heat dissipation on different regions of the battery pack through different flow channels, to enable the heat exchange plate to match the arrangement of different flow channels based on heat generation of different regions, thereby improving temperature uniformity of the battery management system of the present disclosure.

In addition, in the battery management system of the present disclosure, a dryness of the phase change working medium at each outlet is limited to be less than or equal to 0.93, to ensure a liquid phase ratio of the phase change working medium in the flow channel, thereby ensuring heat absorption efficiency of the phase change working medium for the regions of the battery pack in the corresponding flow channel. Therefore, the heat dissipation effect of the heat exchange plate is improved, and the heat dissipation efficiency of the battery management system of the present disclosure is improved.

In an embodiment, when the phase change working medium flows in the flow channel, the dryness of the phase change working medium at each outlet is greater than or equal to 0.2.

In an embodiment, for the pair of inlet and outlet, a latent heat of vaporization of the phase change working medium between the pair of inlet and outlet is $\Delta h$, a mass flow of the phase change working medium between the pair of inlet and outlet is $Q_m$, and a heat generation power of a part of the battery pack in contact with the at least one flow channel between the pair of inlet and outlet is q.

The foregoing parameters satisfy a condition:

$$1.1 \leq \frac{\Delta h Q_m}{q} \leq 5$$

In an embodiment, the latent heat of vaporization $\Delta h$ of the phase change working medium between the pair of inlet and outlet satisfies a condition:

$$5 \times 10^3 \, \text{J/kg} \leq \Delta h \leq 5 \times 10^5 \, \text{J/kg}$$

In an embodiment, the mass flow $Q_m$ of the phase change working medium between the pair of inlet and outlet satisfies a condition: $0.0036 \, \text{kg/s} \leq Q_m \leq 0.15$ kg/s.

In an embodiment, the heat generation power q of the part of the battery pack in contact with the at least one flow channel between the pair of inlet and outlet satisfies a condition:

$$300 \, \text{W} \leq q \leq 7000 \, \text{W}$$

In an embodiment, a density of the phase change working medium is $\rho$, and a cross-sectional area of the at least one flow channel between the pair of inlet and outlet is S.

The mass flow $Q_m$ of the phase change working medium corresponding to the pair of inlet and outlet and the parameters $\rho$ and S satisfy a condition:

$$0.06\,\mathrm{m/s} \leq \frac{Q_m}{S\rho} \leq 0.8\,\mathrm{m/s}$$

In an embodiment, the density $\rho$ of the phase change working medium satisfies a condition: $900\mathrm{kg/m^3} \leq \rho \leq 1500\mathrm{kg/m^3}$.

In an embodiment, the cross-sectional area S of the at least one flow channel between the pair of inlet and outlet satisfies a condition: $2.1 \times 10^{-5}\mathrm{m^2} \leq S \leq 4.5 \times 10^{-4}\mathrm{m^2}$.

In an embodiment, a projection area of the at least one flow channel between the pair of inlet and outlet on the battery pack is A.

The mass flow $Q_m$ of the phase change working medium corresponding to the pair of inlet and outlet, the cross-sectional area S of the corresponding at least one flow channel, and the projection area A of the corresponding at least one flow channel satisfy a condition:

$$\frac{Q_m A}{S} < 340\mathrm{kg/s}$$

In an embodiment, the projection area A of the at least one flow channel between the pair of inlet and outlet on the battery pack satisfies a condition: $0.06\mathrm{m^2} \leq A \leq 3.31\mathrm{m^2}$.

In an embodiment, the phase change working medium has a first correction coefficient $\beta1$ and a second correction coefficient $\beta2$.

The mass flow $Q_m$ of the phase change working medium corresponding to the pair of inlet and outlet, the cross-sectional area A and the projection area S of the corresponding at least one flow channel, the heat generation power q of the corresponding part of the battery pack, the density $\rho$ of the phase change working medium, the first correction coefficient $\beta1$, and the second correction coefficient $\beta2$ satisfy a condition:

$$3.2 \leq \frac{q}{A\left[\beta_1\left(\frac{Q_m}{S\rho}\right)^2 - \beta_2\frac{Q_m}{S\rho}\right]} \leq 30$$

In an embodiment, the first correction coefficient $\beta1$ of the phase change working medium is -6.8, and the second correction coefficient $\beta2$ is 492.5.

In an embodiment, the phase change working medium includes a 1, 1, 1, 2-tetrafluoroethane material.

In an embodiment, the heat generation power of the part of the battery pack in contact with the at least one flow channel between the pair of inlet and outlet is q, and a total heat generation power generated by the battery pack is Q.

The foregoing parameters satisfy a condition:

$$0.1 \leq \frac{q}{Q} \leq 0.9$$

In an embodiment, the total heat generation power Q generated by the battery pack satisfies a condition: $500\mathrm{W} \leq Q \leq 7500\mathrm{W}$.

In an embodiment, the battery management system includes two to eight pairs of inlets and outlets.

In an embodiment, the battery management system further includes a flow control device. The flow control device is in communication between at least one inlet or at least one outlet and the phase change working medium source, and the flow control device is configured to control the mass flow of the phase change working medium in the flow channel.

According to a second aspect, an embodiment of the present disclosure provides a vehicle, including a battery management system.

It may be understood that, since the vehicle provided in the second aspect of the present disclosure adopts the battery management system provided in the first aspect of the present disclosure, the vehicle has effects of improving temperature uniformity and improving heat dissipation efficiency.

## BRIEF DESCRIPTION OF THE DRAWINGS

FIG. 1 is a schematic diagram of a structure of a battery management system according to an embodiment of the present disclosure;

FIG. 2 is a schematic exploded view of the battery management system according to an embodiment of the present disclosure;

FIG. 3 is a schematic diagram of a partial structure of the battery management system according to an embodiment of the present disclosure;

FIG. 4 is another schematic diagram of a partial structure of the battery management system according to an embodiment of the present disclosure;

FIG. 5 is a schematic top view of a partial structure of the battery management system according to an embodiment of the present disclosure; and

FIG. 6 is another schematic top view of a partial structure of the battery management system according to an embodiment of the present disclosure.

## DETAILED DESCRIPTION

For ease of understanding the present disclosure, the present disclosure is described more comprehensively below with reference to the related accompanying drawings. Preferred implementations of the present disclosure are shown in the accompanying drawings. However, the present disclosure may be implemented in many different forms, and is not limited to the implementations described in this specification. On the contrary, the implementations are provided to make the disclosed content of the present disclosure more comprehensive.

The following embodiments are described with reference to the accompanying drawings, and are used to exemplify particular embodiments that the present disclosure can be used to implement. The serial numbers for components in this specification, such as "first" and "second", are only used to distinguish the described objects, and do not have any order or technical meaning. However, the terms "connection" and "coupling" described in the present disclosure include direct and indirect connection (coupling) unless otherwise specified. The orientation terms mentioned in the present disclosure, for example, "upper", "below", "before", "behind", "left", "right", "inside", "outside", and "side surface", are merely directions in which reference is made to the accompanying drawings. Therefore, the orientation terms used are intended to better and more clearly describe and understand the present disclosure, instead of indicating or implying that the device or element needs to a specific orientation, be constructed in a specific orientation, and operate in a specific orientation. Therefore, the orientation terms used cannot be construed as a limitation on the present disclosure.

In the descriptions of the present disclosure, it should be noted that, unless otherwise explicitly specified or defined, the terms such as "mount", "connect", and "connection" should be understood in a broad sense. For example, the connection may be a fixed connection, a detachable connection, or an integral connection; or the connection may be a mechanical connection; or the connection may be a direct connection, an indirect connection through an intermediary, or internal communication between two components. A person of ordinary skill in the art may understand specific meanings of the terms in the present disclosure according to specific situations. It should be noted that, in the specification, claims, and accompanying drawings of the present disclosure, the terms "first", "second", or the like are intended to distinguish between different objects but do not indicate a particular order. In addition, the term "include", "may include", "comprise", or "may comprise" used in the present disclosure indicate existence of corresponding disclosed functions, operations, elements, and the like, and do not limit one or more other functions, operations, elements, and the like. In addition, the term "include" or "comprise" indicates existence of corresponding features, numbers, steps, operations, elements, parts, or combinations thereof disclosed in the specification, but does not exclude existence or addition of one or more other features, numbers, steps, operations, elements, parts, or combinations thereof, and is intended to cover non-exclusive inclusion.

Unless otherwise defined, meanings of all technical and scientific terms used in this specification are the same as those usually understood by a person skilled in the art to which the present disclosure belongs. In this specification, terms used in this specification of the present disclosure are merely intended to describe objectives of the specific implementations, but are not intended to limit the present disclosure.

A vehicle provided in the present disclosure includes a battery management system. The battery management system is configured to provide electric energy to the vehicle and drive the vehicle to operate.

It may be understood that, in some other embodiments, the battery management system may further be applied to other scenarios. This is not particularly limited in the present disclosure.

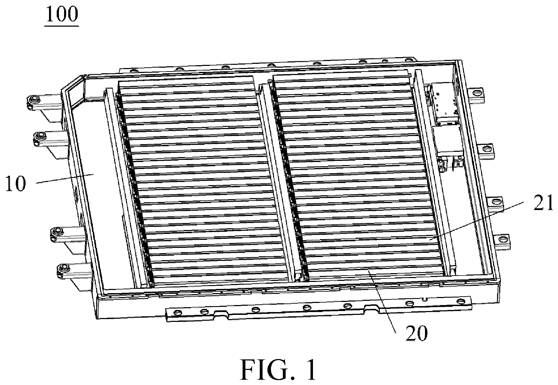

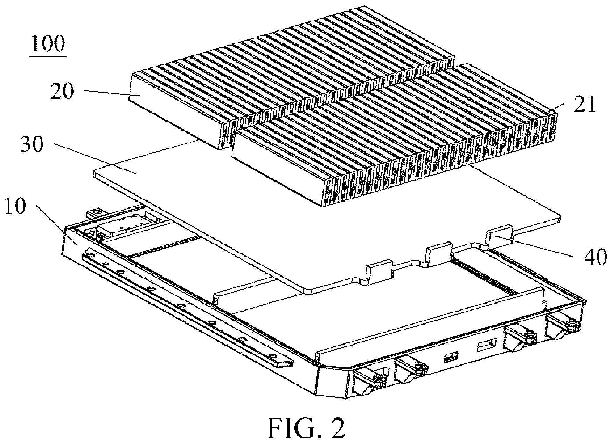

FIG. 1 is a schematic diagram of a structure of a battery management system 100 according to an embodiment of the present disclosure, and FIG. 2 is a schematic exploded view of the battery management system 100 according to an embodiment of the present disclosure.

As shown in FIG. 1 and FIG. 2, the battery management system 100 of the present disclosure includes a battery tray 10 and a battery pack 20. The battery pack 20 includes multiple batteries 21. The multiple batteries 21 are arranged side by side in the battery tray 10. The battery tray 10 is configured to carry and protect the battery pack 20.

The battery pack 20 is configured to be electrically connected to an external circuit. It may be understood that, chemical energy in an electrolyte (not shown in the figure) stored in each battery 21 in the battery pack 20 can be converted into electric energy in cooperation with other structures in the battery 21 and outputted to the external circuit, thereby achieving a discharging function of the battery management system 100 of the present disclosure.

In addition, the external circuit may also be connected to other power supplies to enable currents in the other power supplies to be transferred to the battery 21 through the external circuit, and convert the electric energy into chemical energy in cooperation with the other structures in the battery 21 and store the chemical energy in the electrolyte, thereby achieving a charging function of the battery management system 100 of the present disclosure.

As shown in FIG. 1 and FIG. 2, the battery management system 100 of the present disclosure further includes a heat exchange plate 30. The heat exchange plate 30 is accommodated in the battery tray 10, arranged between the battery tray 10 and the battery pack 20, and attached to a surface of the battery pack 20. The heat exchange plate 30 is configured to be in communication with an external phase change working medium source, to enable a phase change working medium in the external phase change working medium source to enter the heat exchange plate 30 and absorb heat released by the battery pack 20, thereby reducing the temperature of the battery pack 20, and avoiding the impact of high temperature on the activity of the electrolyte in the battery 21 and the impact of high temperature on the service life of the battery 21.

That is, the arrangement of the heat exchange plate 30 can reduce the overall temperature of the battery pack 20, thereby ensuring charging and discharging performance of the battery 21, and reducing the impact of high temperature on the service life of the battery 21. This further improves the service life and stability of the battery management system 100 of the present disclosure.

For ease of description, in FIG. 1 and subsequent figures, a stacking direction of the heat exchange plate 30 and the battery pack 20 in the battery management system 100 is set to a first direction 001, and a second direction 002 and a third direction 003 that are perpendicular to each other are both perpendicular to the first direction 001.

As shown in FIG. 1 and FIG. 2, the batteries 21 in the battery pack 20 are arranged side by side in the second direction 002. It may be understood that, in some other embodiments, the batteries 21 in the battery pack 20 are arranged side by side in the second direction 002, or may be arranged in the third direction 003.

In some other embodiments, the heat exchange plate 30 is attached to a surface of the battery pack 20 away from the battery tray 10. This is not particularly limited in the present disclosure.

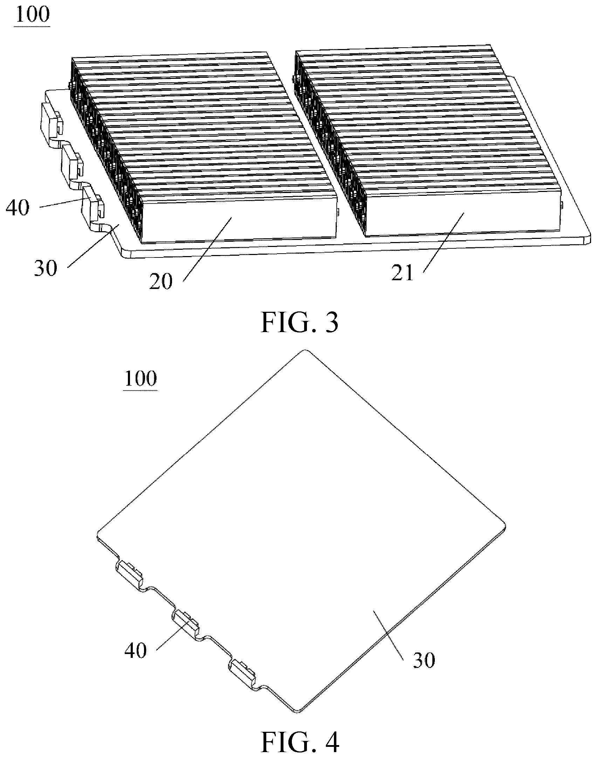

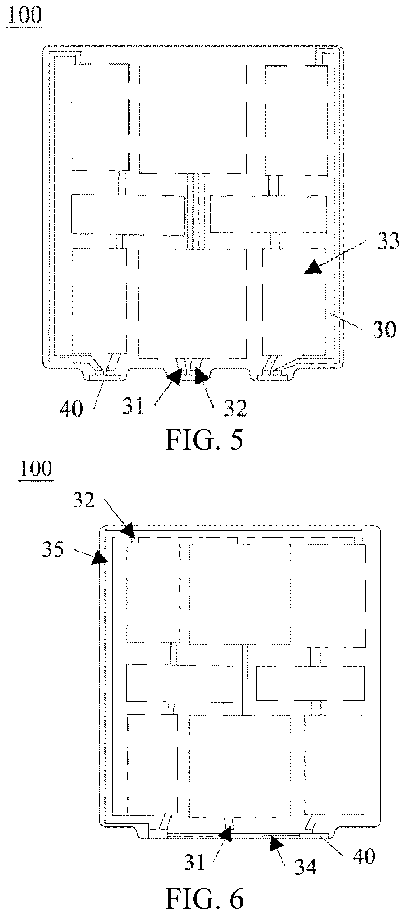

Specifically, FIG. 3 is a schematic diagram of a partial structure of the battery management system 100 according to an embodiment of the present disclosure, FIG. 4 is another schematic diagram of a partial structure of the battery management system 100 according to an embodiment of the present disclosure, and FIG. 5 is a schematic top view of a partial structure of the battery management system 100 according to an embodiment of the present disclosure.

As shown in FIG. 3 to FIG. 5, the heat exchange plate 30 is provided with multiple pairs of inlets 31 and outlets 32. At least one flow channel 33 is in communication between one pair of inlet 31 and outlet 32. Each inlet 31 and each outlet 32 are respectively configured to be in communication with the external phase change working medium source, to enable the phase change working medium in the phase change working medium source to enter the flow channel 33 through the inlet 31 and flow back from the outlet 32 to the phase change working medium source along the flow channel 33.

In the present disclosure and subsequent embodiments, descriptions of at least one flow channel 33 between one pair of inlet 31 and outlet 32 represent all flow channels 33 between the pair of inlet 31 and outlet 32.

It may be understood that, when flowing through each flow channel 33, the phase change working medium can absorb the heat released by the battery pack 20 adjacent to each flow channel 33, thereby reducing the temperature of the battery pack 20 and achieving a heat dissipation function of the heat exchange plate 30. Therefore, a heat dissipation function of the battery management system 100 of the present disclosure is achieved.

In the first direction 001, a projection of the battery pack 20 on the heat exchange plate 30 is accommodated in the multiple flow channels 33, to enable the regions of the battery pack 20 to be close to the flow channels 33. The phase change working medium flows in each flow channel 33. It may be understood that, the mutual matching between an arrangement region of the flow channel 33 and an arrangement position of the battery pack 20 can ensure that the heat released by the regions of the battery pack 20 can be absorbed by the phase change working medium, thereby avoiding overheating in some regions of the battery pack 20 caused by a limited arrangement range of the flow channel 33. Therefore, temperature uniformity of the battery management system 100 of the present disclosure is improved.

During actual operation of the battery management system 100 of the present disclosure, due to the arrangement of the structure of each battery 21 in the battery pack 20 and the impact of surrounding structures, the regions of the battery 21 may have different temperatures in the second direction 002 and the third direction 003. Therefore, the regions of the battery pack 20 have different temperatures.

The multiple pairs of inlets 31 and outlets 32 that are in communication with the phase change working medium source are provided in the heat exchange plate 30, and the flow channel 33 is arranged between one pair of inlet 31 and outlet 32. It may be understood that, the phase change working mediums in different flow channels 33 in the heat exchange plate 30 can absorb the heat released by different regions of the battery pack 20., to enable the heat exchange plate 30 of the present disclosure to achieve heat dissipation on different regions of the battery pack 20 through different flow channels 33.

That is, in the battery management system 100 of the present disclosure, different flow channels 33 may be arranged between different pairs of inlets 31 and outlets 32, to enable each flow channel 33 to be arranged to match the heat generation of different regions of the battery pack 20. While the heat dissipation function of the phase change working medium for the regions of the battery pack 20 is ensured, the heat dissipation effect of the phase change working medium for the regions of the battery pack 20 is ensured, thereby improving the temperature uniformity of the battery management system 100 of the present disclosure.

In addition, a dryness of the phase change working medium flowing out of each outlet 32 is less than or equal to 0.93. Since the phase change working medium flowing in the flow channel 33 is converted from a liquid phase into a gas phase after absorbing a specific amount of heat, as the amount of heat absorbed gradually increases, a ratio of the liquid phase to the gas phase also gradually increases. In addition, the amount of heat that can be further absorbed by the phase change working medium in the gas phase is relatively low.

Specifically, the dryness is a mass ratio of a mass of vapor to a total mass. That is, in the present disclosure, the dryness of the phase change working medium flowing out of the outlet 32 is a ratio of a mass of the phase change working medium in the gas phase to a total mass of the phase change working medium in the liquid phase and the gas phase.

When the dryness of the phase change working medium flowing out of the outlet 32 is greater than 0.93, a phase change working medium with an excessive content of gas phase exists in the phase change working medium in an end portion of the flow channel 33 close to the outlet 32, resulting in a relatively poor heat dissipation capability of the phase change working medium in this part of the flow channel 33. It may even result in some regions of the flow channel 33 being full of the phase change working medium in the gas phase. This may make it difficult for local heat in the battery pack 20 to be absorbed by the phase change working medium, resulting in local overheating. Therefore, the service life and service stability of the battery management system 100 are affected.

It may be understood that, the dryness of the phase change working medium flowing out of each outlet 32 is set to be less than or equal to 0.93, which can ensure a ratio of the phase change working medium in the liquid phase in each flow channel 33, thereby ensuring the heat absorption efficiency of the phase change working medium for the regions of the battery pack 20 corresponding to each flow channel 33. Therefore, the heat dissipation effect of the heat exchange plate 30 is improved, and the heat dissipation efficiency of the battery management system 100 of the present disclosure is improved.

In this way, compared with the related art in which a heat exchange plate having a single flow channel is used to achieve heat dissipation on the battery pack, in the battery management system 100 of the present disclosure, multiple pairs of inlets 31 and outlets 32 are provided in a heat exchange plate 30, and a flow channel 33 in which a phase change working medium flows is arranged between one pair of inlet 31 and outlet 32. In this way, the heat exchange plate 30 can absorb heat released by different regions of the battery pack 20. In addition, a dryness of the phase change working medium at each outlet 32 is less than or equal to 0.93, which ensures a heat dissipation effect of the heat exchange plate 30. Therefore, temperature uniformity and heat dissipation efficiency of the battery management system 100 of the present disclosure are improved.

In an embodiment, the dryness of the phase change working medium flowing out of each outlet 32 further needs to be greater than or equal to 0.07. It may be understood that, when the dryness of the phase change working medium flowing out of each outlet 32 is greater than or equal to 0.07, each outlet 32 can generate the phase change working medium in a gas-liquid change state, thereby improving the temperature uniformity and the heat dissipation efficiency of the battery management system 100.

In an embodiment, the dryness of the phase change working medium flowing out of each outlet 32 further needs to be greater than or equal to 0.2. It may be understood that, the lower limit of the dryness of the phase change working medium flowing out of the outlet 32 ensures the ratio of the phase change working medium in the gas phase in each flow channel 33, thereby ensuring the mutual matching between the heat absorbed by the phase change working medium in each flow channel 33 and the heat of the corresponding battery pack 20, and avoiding an excess heat dissipation capability of the heat exchange plate 30 caused by the excessive phase change working medium. Further, while the heat dissipation efficiency of the battery management system 100 of the present disclosure is ensured, manufacturing costs of the battery management system 100 of the present disclosure are reduced.

Specifically, in an embodiment, a latent heat of vaporization of the phase change working medium between the pair of inlet 31 and outlet 32 is $\Delta h$. The latent heat of vaporization $\Delta h$ may be obtained by detecting a pressure and temperature environment of the phase change working medium at the outlet 32 and matching and looking up a physical property table. Specifically, during detection of the latent heat of vaporization of the phase change working medium at the outlet 32, a barometer may be used to detect a pressure of an environment in which the phase change working medium at the outlet is located. A thermometer may be used to detect a temperature of the environment in which the phase change working medium at the outlet is located.

A mass flow of the phase change working medium between the pair of inlet 31 and outlet 32 is $Q_m$. The mass flow $Q_m$ may be obtained by detecting a mass of the phase change working medium flowing into the inlet 31 per unit time.

A heat generation power of a part of the battery pack 20 in contact with the at least one flow channel 33 between the pair of inlet 31 and outlet 32 is q. Since the battery pack 20 generates heat during operation, the heat is transferred to the heat exchange plate 30 through a contact surface between the battery pack 20 and the heat exchange plate 30. The heat is spread around in a planar direction of the contact surface, thereby making a heat-generating surface of the battery pack 20 close to the heat exchange plate 30.

There are multiple flow channels 33 in the heat exchange plate 30, and each flow channel 33 is spaced away from each other. When the heat is transferred to a surface of the battery pack 20 that each flow channel 33 is in contact with, the heat of the surface is absorbed by the flow channel 33. For all flow channels 33 between the pair of inlet and outlet, the flow channels 33 are in contact with some regions of the battery pack 20. Correspondingly, the heat generation power q represents heat generated by the battery pack in some regions per unit time.

The heat generation power q may be obtained by simulation through an electrochemical model or obtained through a thermal balance experiment on the battery pack 20. Specifically, in a process of obtaining data of the heat generation power q, the heat exchange plate 30 needs to be limited from having a phase change working medium, to avoid affecting a detection result of the heat generation power q in the regions of the battery pack 20 by the phase change working medium.

The foregoing parameters satisfy a condition:

$$1.1 \leq \frac{\Delta h Q_m}{q} \leq 5$$

.

Values of Δh, $Q_m$, and q in the foregoing formula are data obtained from the phase change working medium or the at least one flow channel 33 between the pair of inlet 31 and outlet 32. That is, the values in the foregoing formula are for one pair of inlet 31 and outlet 32, rather than values between the inlet 31 in one pair of inlet 31 and outlet 32 and the outlet 32 in another pair of inlet 31 and outlet 32.

Specifically, the foregoing formula represents a ratio of the heat that can be absorbed by the phase change working medium in the at least one flow channel 33 between the pair of inlet 31 and outlet 32 to the heat generation power in some regions of the corresponding battery pack 20. That is, the foregoing formula represents a matching relationship between the heat dissipation capability of the phase change working medium in the at least one flow channel 33 between the pair of inlet 31 and outlet 32 and the heat generated by some regions of the battery pack 20 corresponding to the flow channel 33.

When a value of the foregoing formula is greater than 5, the dryness of the phase change working medium at the corresponding outlet 32 is less than 0.2, causing a relatively small ratio of the phase change working medium in the gas phase in the corresponding flow channel 33, leading to mismatching between a content of the phase change working medium in the liquid phase and the heat generated by the part of the battery pack 20 corresponding to the flow channel 33, resulting in an excess heat dissipation capability of the heat exchange plate 30. This causes an increase in the manufacturing costs of the battery management system 100 of the present disclosure.

However, when a value of the foregoing formula is less than 1.1, the dryness of the phase change working medium at the corresponding outlet 32 is greater than 0.93, causing a relatively large ratio of the phase change working medium in the gas phase in the corresponding flow channel 33. The content of the phase change working medium in the liquid phase does not match the heat generated by the part of the battery pack 20 corresponding to the flow channel 33, causing poor heat dissipation capability of the heat exchange plate 30, making it difficult for the heat of some regions of the battery pack 20 corresponding to the flow channel 33 to be absorbed to reduce the temperature in time. This affects the service life and the service stability of the battery management system 100 of the present disclosure.

Therefore, limiting the value of the foregoing formula to 1.1 to 5 can ensure the mutual matching between the heat dissipation capability of the phase change working medium in the flow channel 33 and the heat generated by some regions of the battery pack 20 corresponding to the flow channel 33, thereby ensuring the heat dissipation efficiency of the battery management system 100 of the present disclosure and reducing the manufacturing costs of the battery management system 100 of the present disclosure, and further improving the temperature uniformity of the regions of the battery pack 20 corresponding to the flow channel 33.

It may be understood that, in some other embodiments, during verification of the heat dissipation performance of the heat exchange plate 30, a heating block may alternatively be arranged on the heat exchange plate 30 to replace heat release in the regions of the battery pack 20. A projection of each heating block on the heat exchange plate 30 needs to be accommodated in the at least one flow channel 33 between the pair of inlet 31 and outlet 32. Correspondingly, a heating power of each heating block corresponds to the heat generation power of some regions of the battery pack 20. In some other embodiments, the heating block may alternatively be replaced with a heating film. This is not particularly limited in the present disclosure.

In an embodiment, the latent heat of vaporization Δh of the phase change working medium between the pair of inlet 31 and outlet 32 satisfies a condition: $1.5 \times 10^5$ J/kg$\leq$Δh$\leq 5 \times 10^5$ J/kg. The latent heat of vaporization represents a capability of the working medium to absorb the heat from the liquid phase to the gas phase. When the latent heat of vaporization of the phase change working medium is less than $5 \times 10^3$ J/kg, the capability of the phase change working medium to absorb the heat is relatively weak, which may cause the phase change working medium to be vaporized after absorbing less heat. The latent heat of vaporization Δh of the phase change working medium between the pair of inlet 31 and outlet 32 refers to a latent heat of vaporization Δh of a phase change working medium between any pair of inlet 31 and outlet 32, rather than a latent heat of vaporization Δh of a phase change working medium between the inlet 31 in one pair of inlet 31 and outlet 32 and the outlet 32 in another pair of inlet 31 and outlet 32.

That is, under the premise of ensuring the dryness of the phase change working medium flowing out of the outlet 32 to be unchanged, the latent heat of vaporization is excessively small, resulting in a relatively small amount of heat that can be absorbed by the phase change working medium flowing in the flow channel 33, causing a relatively poor heat dissipation capability of the heat exchange plate 30, and affecting the heat dissipation effect of the battery management system 100 of the present disclosure.

In an embodiment, the mass flow $Q_m$ of the phase change working medium between the pair of inlet 31 and outlet 32 satisfies a condition: 0.0036kg/s$\leq Q_m \leq$0.15 kg/S.

When the mass flow of the phase change working medium in the flow channel 33 is less than 0.0036kg/s, a flow of the phase change working medium in the flow channel 33 is excessively small. As a result, the phase change working medium has a high degree of vaporization after absorbing heat, and subsequently has an insufficient heat absorption capability, thereby reducing the heat dissipation effect of the heat exchange plate 30. In addition, an excessively small mass flow also leads to a relatively small mass of the phase change working medium in the flow channel 33 per unit time, resulting in relatively poor heat dissipation efficiency of the heat exchange plate 30, and relatively poor heat dissipation efficiency of the battery management system 100 of the present disclosure. The mass flow $Q_m$ of the phase change working medium between the pair of inlet 31 and outlet 32 refers to a mass flow $Q_m$ of a phase change working medium between any pair of inlet 31 and outlet 32, rather than a mass flow $Q_m$ of a phase change working medium between the inlet 31 in one pair of inlet 31 and outlet 32 and the outlet 32 in another pair of inlet 31 and outlet 32.

While flowing in the flow channel 33, the phase change working medium is also affected by flow resistance of the flow channel 33, which reduces a flow rate of the phase change working medium. When the mass flow of the phase change working medium in the flow channel 33 is greater than 0.15 kg/s, the flow rate of the phase change working medium in the flow channel 33 is excessively fast. In a process in which the phase change working medium flows through the entire flow channel 33, the power consumed by the phase change working medium under the impact of the flow resistance increases, thereby increasing the power required when the phase change working medium is injected into the heat exchange plate 30.

Therefore, the mass flow of the phase change working medium is limited to 0.0036kg/S to 0.15 kg/s. The heat dissipation effect of the heat exchange plate 30 can be further improved when the loss power of the phase change working medium in the flow channel 33 is reduced. This further improves the heat dissipation efficiency of the battery management system 100 of the present disclosure. In addition, the control of the mass flow further enables mutual matching between the phase change working medium in each flow channel 33 and the heat of the regions of the corresponding battery pack 20, thereby further improving the temperature uniformity of the battery management system 100 of the present disclosure.

In an embodiment, the heat generation power q of the part of the battery pack 20 in contact with the at least one flow channel 33 between the pair of inlet 31 and outlet 32 satisfies a condition: 300W≤q≤7000W. When the heat generation power of some regions of the battery pack 20 corresponding to the flow channel 33 is less than 300 W, the phase change working medium in the flow channel 33 corresponding to the regions has a relatively small evaporation ratio after absorbing heat in the regions. That is, an excess heat dissipation capability of the phase change working medium in the flow channel 33 corresponding to the regions is caused.

However, when the heat generation power of some regions of the battery pack 20 corresponding to the flow channel 33 is greater than 7000 W, the heat absorption capability of the phase change working medium in the flow channel 33 corresponding to the regions is insufficient to absorb the heat in the regions, making it difficult for the heat in the regions to be absorbed, causing overheating in the regions and affecting the service life and the service stability of the battery management system 100.

Therefore, limiting the heat generation power of the part of the battery pack 20 in contact with each flow channel 33 to 300 W to 7000 W can ensure the mutual matching between the heat dissipation capability of the phase change working medium in each flow channel 33 and the heat of the corresponding region, thereby improving the heat dissipation effect of the heat exchange plate 30, and further improving the heat dissipation efficiency of the battery management system 100 of the present disclosure. In addition, the range control of the heat generation power in the regions of the battery pack 20 further enables the mutual matching between the phase change working medium in each flow channel 33 and the heat of the regions of the corresponding battery pack 20, thereby further improving the temperature uniformity of the battery management system 100 of the present disclosure.

In an embodiment, a density of the phase change working medium is $\rho$, and a cross-sectional area of the at least one flow channel 33 between the pair of inlet 31 and outlet 32 is S. The mass flow $Q_m$ of the phase change working medium corresponding to the pair of inlet 31 and outlet 32 and the parameters $\rho$ and S satisfy a condition:

$$0.06\,\mathrm{m/s} \leq \frac{Q_m}{S\rho} \leq 0.8\,\mathrm{m/s}$$

Specifically, the foregoing formula represents the flow rate of the phase change working medium in some flow channels 33 in which only the phase change working medium in the liquid phase exists. when a value of the foregoing formula is less than 0.06 m/s, the flow rate of the phase change working medium in the liquid phase is excessively small, resulting in a poor heat dissipation capability of the phase change working medium, thereby reducing the heat dissipation effect of the heat exchange plate 30. In addition, an excessively slow flow rate also leads to a relatively small mass of the phase change working medium flowing through the flow channel 33 per unit time, resulting in relatively poor heat dissipation efficiency of the heat exchange plate 30, and relatively poor heat dissipation efficiency of the battery management system 100 of the present disclosure.

when a value of the foregoing formula is greater than 0.8 m/s, the flow rate of the phase change working medium in the flow channel 33 is excessively fast. In a process in which the phase change working medium flows through the entire flow channel 33, the power consumed by the phase change working medium under the impact of the flow resistance increases, thereby increasing the power required when the phase change working medium is injected into the heat exchange plate 30.

Therefore, the mass flow of the phase change working medium is limited to 0.06 m/s to 0.8 m/s. The heat dissipation effect of the heat exchange plate 30 can be further improved when the loss power of the phase change working medium in the flow channel 33 is reduced. This further improves the heat dissipation efficiency of the battery management system 100 of the present disclosure. In addition, the control of the flow rate of the phase change working medium further enables mutual matching between the mass of the phase change working medium flowing through each flow channel 33 per unit time and the heat of the regions of the corresponding battery pack 20, thereby further improving the temperature uniformity of the battery management system 100 of the present disclosure.

In an embodiment, the density $\rho$ of the phase change working medium satisfies a condition: $900kg/m^3 \leq \rho \leq 1500kg/m^3$.

In an embodiment, the cross-sectional area S of the at least one flow channel 33 between the pair of inlet 31 and outlet 32 satisfies a condition: $2.1 \times 10^{-5}m^2 \leq S \leq 4.5 \times 10^{-4}m^2$.

When the cross-sectional area S is less than $2.1 \times 10^{-5}m^2$, the mass of the phase change working medium in the flow channel 33 is reduced, thereby reducing the heat dissipation effect and the heat dissipation efficiency of the heat exchange plate 30.

When the cross-sectional area S is greater than $4.5 \times 10^{-4}m^2$, since a contact area between the battery pack 20 and the heat exchange plate 30 is unchanged, a thickness of the heat exchange plate 30 is increased. It may be understood that an increase in the cross-sectional area S leads to an increase in a spacing between the flow channels 33 in the first direction 001. Therefore, while the manufacturing costs of the heat exchange plate 30 are increased, occupied space of the battery pack 20 in the battery tray 10 is reduced, resulting in a decrease in an electric capacity of the battery management system 100 of the present disclosure.

In addition, the increase in the cross-sectional area S may further cause the flow channel 33 to be wider in the second direction 002 or the third direction 003, thereby reducing the flow rate of the phase change working medium in the flow channel 33 and reducing the heat dissipation efficiency of the heat exchange plate 30.

Therefore, limiting the cross-sectional area S to $2.1 \times 10^{-5}m^2$ to $4.5 \times 10^{-4}m^2$ can improve the heat dissipation efficiency of the battery management system 100 of the present disclosure, and reduce the manufacturing costs of the heat exchange plate 30. In addition, the occupied space of the battery pack 20 in the battery management system 100 can further be ensured, and the electric capacity of the battery management system 100 of the present disclosure can be ensured.

In an embodiment, a projection area of the at least one flow channel 33 between the pair of inlet 31 and outlet 32 on the battery pack 20 is A.

The mass flow $Q_m$ of the phase change working medium corresponding to the pair of inlet 31 and outlet 32, the cross-sectional area S of the corresponding flow channel 33, and the projection area A of the corresponding flow channel 33 satisfy a condition:

$$\frac{Q_m A}{S} < 340kg/s$$

Specifically, the foregoing formula represents a convective heat exchange capability of the heat exchange plate 30. when a value of the foregoing formula is greater than or equal to 340kg/s, it indicates that the convective heat exchange capability of the heat exchange plate 30 is excessively strong, leading to mismatching between the heat absorption capability of the phase change working medium flowing in the heat exchange plate 30 and the heat of the corresponding battery pack 20, resulting in an excess heat dissipation capability of the heat exchange plate 30.

That is, setting the foregoing formula to be less than 340kg/s can ensure the mutual matching between the heat absorbed by the phase change working medium in each flow channel 33 and the heat of the corresponding battery pack 20, and avoid an excess heat dissipation capability of the heat exchange plate 30 caused by the excessive phase change working medium. Further, while the heat dissipation efficiency of the battery management system 100 of the present disclosure is ensured, manufacturing costs of the battery management system 100 of the present disclosure are reduced.

In an embodiment, the projection area A of the at least one flow channel 33 between the pair of inlet 31 and outlet 32 on the battery pack 20 satisfies a condition: $0.06m^2 \leq A \leq 3.31m^2$. When the projection area A is less than 0.06 m², a convective heat exchange area between a single flow channel 33 and the battery pack 20 decreases, which may lead to mismatching between the heat absorption capability of the phase change working medium in the flow channel 33 and the heat of the battery pack 20 in the corresponding regions, thereby reducing the heat dissipation efficiency of the battery management system 100 of the present disclosure.

The flow resistance of the flow channel 33 increases as a length of the flow channel 33 increases. When the projection area A is greater than 3.31 m², the length of the flow channel 33 is relatively long, leading to an increase in the flow resistance of the flow channel 33, and an increase in the power consumed by the phase change working medium when flowing through the flow channel 33.

It may be understood that, the limitation of a range of the projection area can reduce the power required by the phase change working medium source to inject the phase change working medium into the heat exchange plate 30, and can also ensure the mutual matching between the heat absorption capability of the phase change working medium in the flow channel 33 and the heat of the battery pack 20 in the corresponding region, thereby improving the temperature uniformity and the heat dissipation efficiency of the battery management system 100 of the present disclosure.

In an embodiment, the phase change working medium has a first correction coefficient $\beta1$ and a second correction coefficient $\beta2$.

The mass flow $Q_m$ of the phase change working medium corresponding to the pair of inlet 31 and outlet 32, the cross-sectional area A and the projection area S of the corresponding flow channel 33, the heat generation power q of the corresponding part of the battery pack 20, the density $\rho$ of the phase change working medium, the first correction coefficient $\beta1$, and the second correction coefficient $\beta2$ satisfy a condition:

$$3.2°C \leq \frac{q}{A\left[\beta_1\left(\frac{Q_m}{S\rho}\right)^2 + \beta_2\frac{Q_m}{S\rho}\right]} \leq 30°C$$

Specifically, the foregoing formula represents a theoretical difference between a temperature of a surface of some regions of the battery pack 20 in contact with the corresponding flow channel 33 and a temperature of the phase change working medium at the inlet 31 of the flow channel 33. It may be understood that, the difference represents a difference between a temperature of the battery pack 20 and a temperature of the phase change working medium.

When the theoretical temperature difference in the regions is controlled to range from 3.2°C to 30°C, a temperature difference between the battery pack 20 and the surface of the battery pack 20 in contact with the heat exchange plate 30 is within 27°C. It may be understood that, the control of the theoretical temperature difference in the regions can reduce a temperature difference range in the regions of the battery pack 20, further improving the temperature uniformity of the battery management system 100 of the present disclosure.

In an embodiment, the first correction coefficient $\beta1$ of the phase change working medium is -6.8, and the second correction coefficient $\beta2$ is 492.5.

In an embodiment, the phase change working medium includes a 1, 1, 1, 2-tetrafluoroethane material. Specifically, the phase change working medium includes R410a and R134yf.

In an embodiment, the heat generation power of the part of the battery pack 20 in contact with the at least one flow channel 33 between the pair of inlet 31 and outlet 32 is q, and a total heat generation power generated by the battery pack 20 is Q. The total heat generation power Q may also be obtained by simulation through an electrochemical model, or obtained through a thermal balance experiment on the battery pack 20. Specifically, in a process of obtaining data of the total heat generation power Q, the heat exchange plate 30 needs to be limited from having a phase change working medium, to avoid affecting a detection result of the total heat generation power Q of the battery pack 20 by the phase change working medium.

The foregoing parameters satisfy a condition:

$$0.1 \leq \frac{q}{Q} \leq 0.9$$

Specifically, the foregoing formula represents a division standard of the regions of the battery pack 20 corresponding to the flow channel 33. It may be understood that, when a value of the foregoing formula is less than 0.1, the heat released by the battery pack 20 in some regions may be excessively low, which may lead to mismatching between the heat absorption capability of the phase change working medium in the flow channel 33 and the heat released in the regions, resulting in an excess heat dissipation capability of the heat exchange plate 30.

However, when a value of the foregoing formula is greater than 0.9, the heat released by the battery pack 20 in some regions may be excessively high, which may lead to mismatching between the heat absorption capability of the phase change working medium in the flow channel 33 and the heat released in the regions, resulting in a high temperature in some regions of the battery pack 20.

Therefore, a range of the foregoing formula is limited to 0.1 to 0.9, which further ensures the mutual matching between the heat absorption capability of the phase change working medium in the flow channel 33 and the heat released in the region, thereby further improving the heat dissipation efficiency of the battery management system 100 of the present disclosure.

It may be understood that, in some other embodiments, in a process of verifying the heat dissipation performance of the heat exchange plate 30 by using the heating block or the heating film, a sum of the heating power of all heating blocks or heating films is the total heat generation power of the battery pack 20.

In an embodiment, a total heat generation power generated by the battery pack 20 is Q, where the total heat generation power Q generated by the battery pack 20 satisfies a condition: 500W≤Q≤7500W.

In an embodiment, the battery management system 100 of the present disclosure includes two to eight pairs of inlets 31 and outlets 32. It may be understood that, when a quantity of pairs of inlets 31 and outlets 32 is less than two, the flow channel 33 performs heat dissipation on the surface of the entire battery pack 20, which may have a poor temperature reduction effect on high temperatures in some regions of the battery pack 20, thereby affecting the temperature uniformity of the battery management system 100 of the present disclosure. When the quantity of pairs of inlets 31 and outlets 32 is greater than eight, the manufacturing costs of the entire heat exchange plate 30 and control costs of the phase change working medium of each flow channel 33 in the heat exchange plate 30 are increased.

Therefore, the quantity of pairs of inlets 31 and outlets 32 is limited to 2 to 8, which can reduce the manufacturing costs and the control costs of the heat exchange plate 30, and can improve the temperature uniformity of the battery management system 100 of the present disclosure.

In an embodiment, as shown in FIG. 3 to FIG. 5, the battery management system 100 of the present disclosure further includes a flow control device 40. The flow control device 40 is in communication between at least one inlet 31 or at least one outlet 32 and the phase change working medium source. The flow control device 40 is configured to control the mass flow of the phase change working medium in the flow channel 33.

It may be understood that, the arrangement of the flow control device 40 enables the mutual matching between the flow of the phase change working medium in each flow channel 33 and the heat of some regions of the battery pack 20 corresponding to the flow channel 33, thereby further improving the heat dissipation efficiency of the battery management system 100 of the present disclosure.

In an embodiment, a quantity of flow control devices 40 matches the quantity of pairs of inlets 31 and outlets 32. In this way, each flow control device 40 can control the flow of the phase change working medium in the flow channel 33 between each pair of inlet 31 and outlet 32 respectively.

Specifically, in an embodiment, as shown in FIG. 5, the battery management system 100 of the present disclosure includes three pairs of inlets 31 and outlets 32, and three flow control devices 40. One end of each flow control device 40 is in communication with the inlet 31, and the other end is in communication with the phase change working medium source. That is, the phase change working medium inputted by the external phase change working medium source is inputted into the flow channel 33 from the inlet 31 through the flow control device 40.

It may be understood that, in some other embodiments, the flow control device 40 may alternatively be arranged between the outlet 32 and the phase change working medium source. This is not particularly limited in the present disclosure.

FIG. 6 is another schematic top view of a partial structure of the battery management system according to an embodiment of the present disclosure.

As shown in FIG. 6, the battery management system 100 of the present disclosure further includes a first water collection flow channel 34 and a second water collection flow channel 35. One end of the first water collection flow channel 34 is in communication with the phase change working medium source, and the other end is in communication with the inlets 31. One end of the second water collection flow channel 35 is in communication with the phase change working medium source, and the other end is in communication with the outlets 32.

There are two flow control devices 40, and the two flow control devices 40 are arranged between two of three inlets 31 and the first water collection flow channel 34. It may be understood that, the arrangement of the two flow control devices 40 enables the flow control of the phase change working medium in the flow channel 33 between three pairs of inlets 31 and outlets 32.

It may be understood that, in some other embodiments, the inlets 31 and the outlets 32 may alternatively be in other arrangement relationships. In addition, there may alternatively be other quantities and arrangement positions of the flow control devices 40. This is not particularly limited in the present disclosure.

In an embodiment, during operation of the battery pack 20, the heat generated by the battery 21 may be absorbed by an external structure such as the battery tray 10, causing unit heat generation in different regions of the battery pack 20 spaced away from each other to be in a same range.

Multiple flow channels 33 are arranged between the pair of inlet 31 and outlet 32, and the unit heat generation of the regions of the battery pack 20 corresponding to the flow channels 33 arranged between the pair of inlet 31 and outlet 32 are in the same range. It may be understood that, the arrangement of multiple flow channels 33 can enable the phase change working medium flowing in from an inlet 31 to directly perform heat dissipation on multiple regions with the same unit heat generation. Therefore, the temperature uniformity and the heat dissipation efficiency of the battery management system 100 of the present disclosure are further improved.

It should be understood that, the terms "first" and "second" are merely used for descriptive purposes but are not to be construed as indicating or implying relative importance or implicitly specifying the multiple technical features indicated. Therefore, a feature limited by "first" or "second" may explicitly or implicitly include one or more features. In the descriptions of the implementations of the present disclosure, "multiple" means two or more, unless otherwise defined clearly and specifically.

In the descriptions of this specification, descriptions of reference terms such as "one implementation", "some implementations", "exemplary implementation", "example", "specific example" or "some examples" mean that specific characteristics, structures, materials, or features described with reference to the implementation or example are included in at least one implementation or example of the present disclosure. In this specification, schematic descriptions of the foregoing terms are not necessarily with respect to the same implementation or example. In addition, the described specific characteristics, structures, materials, or features may be combined in a proper manner in any one or more implementations or examples.

It should be understood that the application of the present disclosure is not limited to the foregoing examples. A person of ordinary skill in the art may make improvements or modifications according to the foregoing description, and all of the improvements and modifications should all fall within the protection scope of the attached claims of the present disclosure. A person of ordinary skill in the art may understand that all or some of processes that implement the foregoing embodiments and equivalent modifications made in accordance with the claims of the present disclosure shall fall within the scope of the present disclosure.

**Claims**

1. A battery management system, comprising a battery pack and a heat exchange plate, the heat exchange plate being configured to exchange heat with the battery pack; and

the heat exchange plate being provided with a plurality of pairs of inlets and outlets, at least one flow channel being in communication between one pair of inlet and outlet, and projections of all flow channels in the heat exchange plate on the battery pack covering the battery pack; and each inlet being configured to be in communication with an external phase change working medium source, and when a phase change working medium flows in the flow channel, a dryness of a phase change working medium at each outlet being less than or equal to 0.93.

2. The battery management system according to claim 1, wherein when the phase change working medium flows in the flow channel, the dryness of the phase change working medium at each outlet is greater than or equal to 0.2.

3. The battery management system according to claim 1, wherein for the pair of inlet and outlet, a latent heat of vaporization of the phase change working medium between the pair of inlet and outlet is $\Delta h$, a mass flow of the phase change working medium between the pair of inlet and outlet is $Q_m$, and a heat generation power of a part of the battery pack in contact with the at least one flow channel between the pair of inlet and outlet is q; and the foregoing parameters satisfy a condition:

$$1.1 \leq \frac{\Delta h Q_m}{q} \leq 5$$

4. The battery management system according to claim 3, wherein the latent heat of vaporization $\Delta h$ of the phase change working medium between the pair of inlet and outlet satisfies a condition:

$$1.5 \times 10^2 \, \text{J/kg} \leq \Delta h \leq 5 \times 10^2 \, \text{J/kg}.$$

5. The battery management system according to claim 3, wherein the mass flow $Q_m$ of the phase change working medium between the pair of inlet and outlet satisfies a condition:

$$0.0036 \, \text{kg/s} \leq Q_m \leq 0.15 \, \text{kg/s}.$$

6. The battery management system according to claim 3, wherein the heat generation power q of the part of the battery pack in contact with the at least one flow channel between the pair of inlet and outlet satisfies a condition:

$$300 \, \text{W} \leq q \leq 7000 \, \text{W}.$$

7. The battery management system according to claim 3, wherein a density of the phase change working medium is $\rho$, and a cross-sectional area of the at least one flow channel between the pair of inlet and outlet is S, wherein the mass flow $Q_m$ of the phase change working medium corresponding to the pair of inlet and

$$0.06 \, \text{m/s} \leq \frac{Q_m}{S\rho} \leq 0.8 \, \text{m/s}.$$

outlet and the parameters $\rho$ and S satisfy a condition:

8. The battery management system according to claim 7, wherein the density $\rho$ of the phase change working medium satisfies a condition: $900 \, \text{kg/m}^3 \leq \rho \leq 1500 \, \text{kg/m}^3$.

9. The battery management system according to claim 7, wherein the cross-sectional area S of the at least one flow channel between the pair of inlet and outlet satisfies a condition:

$$2.1 \times 10^{-5} \, \text{m}^2 \leq S \leq 4.5 \times 10^{-4} \, \text{m}^2.$$

**10.** The battery management system according to claim 7, wherein a projection area of the at least one flow channel between the pair of inlet and outlet on the battery pack is A, wherein

the mass flow $Q_m$ of the phase change working medium corresponding to the pair of inlet and outlet, the cross-sectional area S of the corresponding at least one flow channel, and the projection area A of the corresponding at least one flow channel satisfy a condition:

$$\frac{Q_m A}{S} < 340 kg/s.$$

**11.** The battery management system according to claim 10, wherein the projection area A of the at least one flow channel between the pair of inlet and outlet on the battery pack satisfies a condition: $0.06 m^2 \leq A \leq 3.31 m^2$.

**12.** The battery management system according to claim 10, wherein the phase change working medium has a first correction coefficient $\beta_1$ and a second correction coefficient $\beta_2$, wherein

the mass flow $Q_m$ of the phase change working medium corresponding to the pair of inlet and outlet, the cross-sectional area A and the projection area S of the corresponding at least one flow channel, the heat generation power q of the corresponding part of the battery pack, the density $\rho$ of the phase change working medium, the first correction coefficient $\beta_1$, and the second correction coefficient $\beta_2$ satisfy a condition:

$$3.2 \leq \frac{q}{A\left[\beta_1 \left(\frac{Q_m}{S\rho}\right)^2 + \beta_2 \frac{Q_m}{S\rho}\right]} \leq 30;$$

optionally wherein the first correction coefficient $\beta_1$ of the phase change working medium is -6.8, and the second correction coefficient $\beta_2$ of the phase change working medium is 492.5.

**13.** The battery management system according to any one of claims 1 to 12, wherein the heat generation power of the part of the battery pack in contact with the at least one flow channel between the pair of inlet and outlet is q, and a total heat generation power generated by the battery pack is Q; and

the foregoing parameters satisfy a condition:

$$0.1 \leq \frac{q}{Q} \leq 0.9;$$

optionally wherein the total heat generation power Q generated by the battery pack satisfies a condition:

$$500W \leq Q \leq 7500W.$$

**14.** The battery management system according to any one of claims 1 to 13, further comprising a flow control device, the flow control device being in communication between at least one inlet or at least one outlet and the phase change working medium source, and the flow control device being configured to control the mass flow of the phase change working medium in the flow channel.

**15.** A vehicle, comprising the battery management system according to any one of claims 1 to 14.

FIG. 1

<u>100</u>

20

30

10

21

40

FIG. 2

100

40

30

20

21

## FIG. 3

100

40

30

## FIG. 4

100

FIG. 5

100

FIG. 6

Europäisches
Patentamt
European
Patent Office
Office européen
des brevets

**EUROPEAN SEARCH REPORT**

Application Number

EP 24 20 3698

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 218 002 287 U (BYD CO LTD) 9 December 2022 (2022-12-09) * paragraphs [0035] - [0045]; figures 2,7 * | 1-15 | INV. H01M10/613 H01M10/651 H01M10/6552 H01M10/6554 |
| X | KR 2019 0036360 A (MH TECH INC [KR]) 4 April 2019 (2019-04-04) * paragraphs [0042] - [0063]; figures 1,2 * | 1-15 | H01M10/6556 H01M10/6569 |
| X | CN 219 267 745 U (BEIJING CHJ AUTOMOTIVE TECH CO LTD) 27 June 2023 (2023-06-27) * paragraphs [0031] - [0039]; figures 1,2 * | 1-15 | |
| X | CN 108 321 448 B (UNIV SOUTHWEST JIAOTONG) 28 July 2023 (2023-07-28) * paragraphs [0053] - [0060]; figures 1-4 * | 1-15 | |
| A | CN 114 566 732 A (GREAT WALL MOTOR CO LTD) 31 May 2022 (2022-05-31) * paragraphs [0034] - [0035] * | 1-15 | TECHNICAL FIELDS SEARCHED (IPC) H01M |

The present search report has been drawn up for all claims

| Place of search | Date of completion of the search | Examiner |
|---|---|---|
| Munich | 14 March 2025 | Blanc, Sébastien |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 20 3698

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2025

| Patent document cited in search report | | Publication date | Patent family member(s) | | Publication date |
|---|---|---|---|---|---|
| CN 218002287 | U | 09-12-2022 | CN | 218002287 U | 09-12-2022 |
| | | | KR | 20240160153 A | 08-11-2024 |
| | | | US | 2025065691 A1 | 27-02-2025 |
| | | | WO | 2024002201 A1 | 04-01-2024 |
| KR 20190036360 | A | 04-04-2019 | NONE | | |
| CN 219267745 | U | 27-06-2023 | NONE | | |
| CN 108321448 | B | 28-07-2023 | NONE | | |
| CN 114566732 | A | 31-05-2022 | NONE | | |

EPO FORM P0459

For more details about this annex : see Official Journal of the European Patent Office, No. 12/82